# EUROPÄISCHE PATENTSCHRIFT

(11) **EP 1 279 873 B1**
(45) Veröffentlichungstag und Bekanntmachung des Hinweises auf die Patenterteilung: **17.11.2004**
(21) Anmeldenummer: 02090274.8
(22) Anmeldetag: 22.07.2002
(51) Int. Cl.: F16K 1/38

(54) **Ventil**
Valve
Soupape

(30) Priorität: 24.07.2001 DE 10134972
(43) Veröffentlichungstag der Anmeldung: 29.01.2003
(73) Patentinhaber: Demag Cranes & Components GmbH, 58300 Wetter (DE)
(72) Erfinder: Heun, Jürgen, 44379 Dortmund (DE); Löbel, Markus, 58454 Witten (DE); Führmann, Jörg, 91085 Weisendorf (DE)
(74) Vertreter: Moser, Jörg Michael, Dipl.-Ing.

(56) Entgegenhaltungen:
- GB-A- 988 894
- GB-A- 992 613
- US-A- 1 863 712
- US-A- 2 904 305

## Beschreibung

Die Erfindung betrifft ein ein pneumatisches Drosselventil, gemäß dem Oberbegriff des Anspruchs 1.

Pneumatische Drosselventile sind bekannt, beispielsweise aus der DE 199 32 982 A1. Diese weisen einen Drosselkanal in Form eines Innenzylinders auf, welcher eine Zuströmöffnung und eine Abströmöffnung miteinander verbindet. In dem Drosselkanal ist ein zylindrischer Drosselkolben angeordnet, der in seiner Längsrichtung von außen her verschiebbar ist. Üblicherweise lässt sich der Drosselkolben zwischen zwei Endstellungen verschieben. Quer zu seiner Längsrichtung ist der Drosselkolben mit einer radialen Verjüngung versehen, welcher im Bereich einer Drosselkanalkante einen Ringspalt als Überströmdurchlass bildet. Der Ringspaltquerschnitt ist dabei von der axialen Position des Drosselkolbens abhängig.

Weiter offenbart die DE 33 42 405 C2 ein Drosselventil, bei dem der Drosselkolben selbst und die gegenüberliegende Anlagefläche konusförmig ausgebildet sind, was eine degressive Zunahme des Überströmquerschnitts beim Verschieben des Drosselkolbens aus seiner Ausgangsstellung in seine Endstellung bewirkt. Die Querschnittsfläche als Funktion des Kolbenwegs bewirkt bei diesem Drosselventil eine degressive Kennlinie. Es ermöglicht ermöglicht lediglich einen weichen Anlauf im Moment des Öffnens und des Schließens, weil durch die konusförmige Ausbildung des Drosselkolbens und der gegenüberliegenden Anlagefläche der üblicherweise auftretende Sog und dadurch eine zusätzliche Beschleunigung des Kolbens verhindert wird.

Bei einem Hebezeug nach Art eines pneumatischen Balancers ist es mit diesem Drosselventil nicht möglich, dass geringe Lasten feinfühlig gesteuert angehoben und abgesenkt werden können.

Die FR 1 526 193 offenbart ein hydraulisches Ventil mit einem Gehäuse, mit einer Zuströmöffnung und einer Abströmöffnung, die über einen Drosselkanal miteinander verbunden sind und unter Zwischenschaltung eines Drosselkolbens, der im Drosselkanal längsverschieblich zwischen einer Ausgangsstellung und einer Endstellung angeordnet ist und quer zu seiner Längsrichtung eine Verjüngung in Form einer Rillenartigen Vertiefung aufweist, die mit dem Drosselkanal einen Überströmdurchlass bildet, wobei die Verjüngung derart ausgebildet ist, dass der Überströmquerschnitt beim verschieben des Drosselkolbens progressiv zunimmt.

Die DE 1 062 507 beschreibt ein Ventilkegel für Regelventile mit einem durch den Ventilsitz ragenden, sich nach seinem freien Ende hin verjüngenden Rotationskörper mit sich nach dem freien Ende hin verbreiternden Ausnehmungen. Der Rotationskörper besteht aus einem die Größe des Durchtrittsquerschnittes als Funktion der Ventilhubhöhe verändernden Drosselkörper und seine Ausnehmung ist ein etwa V-förmiger, quer durch den Rotationskörper durchgehender Schlitz, dessen symmetrisch zur Längsachse des Rotationskörpers konvergierende Randkurven entsprechend dem gewünschten Zusammenhang zwischen Ventilhub- und Querschnittsfreigabe geformt sind.

Die Aufgabe der Erfindung ist es, ein Durchlassventil für ein Hebezeug nach Art eines Balanciers vorzuschlagen, das eine feinfühlige Steuerung ermöglicht.

Die Lösung dieser Aufgabe ist durch die im Anspruch 1 angegebenen Merkmale gegeben. Durch die kennzeichnenden Merkmale der Unteransprüche ist das Durchlassventil in vorteilhafter Weise weiter ausgestaltet.

Die Lösung sieht zur feinfühligen Betätigung des Durchlassventils unter Ausnutzung auch des größtmöglichen Druckgefälles vor, dass der Drosselkolben drei Längsabschnitte aufweist:
- einen zylindrischen Anfangsabschnitt, dessen Außendurchmesser kleiner als der Innendurchmesser des Hohlraums ist, so dass ein Ringspalt gebildet wird, der den Überströmdurchlass (Restüberströmdurchlass) im Bereich der Ausgangsstellung bildet,
- einen mittleren Abschnitt, der den Anfangsbereich der Verjüngung umfasst, der den progressiv zunehmenden Überströmquerschnitt bildet,
- einen Endabschnitt in Form eines Konusstücks mit steilem Konuswinkel zur Ausnutzung des größtmöglichen Druckgefälles zwischen der Zuströmöffnung und der Abströmöffnung.

Die progressive Zunahme des Überströmquerschnitts bewirkt, dass der Volumenstrom bei gleichmäßigem Verschieben des Drosselkolbens anfangs relativ langsam und dann immer schneller ansteigt. Dies ergibt bei einem Balancier-Hebezeug eine sehr feinfühlige Steuerung.

Eine einfache konstruktive Ausgestaltung sieht vor, dass ein Ende des Drosselkolbens aus dem Gehäuse herausragend ein Betätigungselement bildet, das von einer Bedienperson zur Längsverschiebung des Drosselkolbens mittels des Daumens betätigbar ist.

Der Herstellungsaufwand ist relativ gering, wenn der Drosselkolben ein Zylinder mit einer radialen Verjüngung ist, die in einer seiner Längsrichtungen progressiv abnimmt, und der Drosselkanal einen zum Drosselkolben korrespondierenden zylinderförmigen Hohlraum bildet.

Die Erfindung wird nachfolgend anhand eines in einer Zeichnung dargestellten Ausführungsbeispiels näher beschrieben. Es zeigen:
- Fig. 1: zwei Drosselventile, ein Drosselventil in unbetätigter geschlossener und eines in teilweise offener Stellung,
- Fig. 2a: den Überströmdurchlass bei teilweise offenem Durchlassventil gemäß Fig. 1 in einer vergrößerten Darstellung,
- Fig. 2b: den Überströmdurchlass bei geschlossenem Durchlassventil gemäß Fig. 1 in einer vergrößerten Darstellung,
- Fig. 3: den Drosselkolben gemäß Fig. 1,
- Fig. 4: einen vergrößerten Ausschnitt des Drosselkolbens gemäß Fig. 3 und
- Fig. 5: eine Durchflusskennlinie des Durchlassventils gemäß Fig. 1.

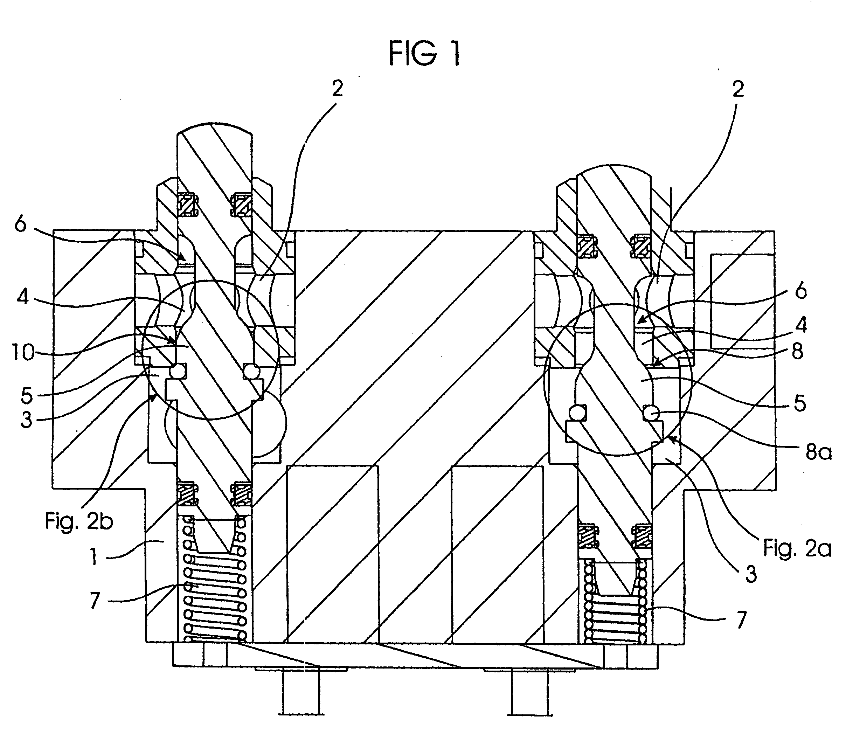

Fig. 1 zeigt ein Gehäuse 1, in dem zwei pneumatische Durchlassventile eines pneumatischen Balancier-Hebezeugs in zwei unterschiedlichen Arbeitsstellungen (geschlossen, teilweise offen) gezeigt sind, wobei als Strömungsmedium Druckluft verwendet wird. Jedes Durchlassventil ist mit einer Zuströmöffnung 2 und einer Abströmöffnung 3 für die Druckluft versehen, wobei beide Öffnungen 2, 3 über einen Drosselkanal 4 miteinander verbunden sind. Zwischen der Zuströmöffnung 2 und der Abströmöffnung 3 ist ein Drosselkolben 5 zwischengeschaltet, der zwischen einer Ausgangsstellung und einer Endstellung längsverschieblich im Drosselkanal 4 angeordnet ist. Bezogen auf Fig. 1 befindet sich das linke Drosselventil in seiner Ausgangsstellung, es ist also geschlossen.

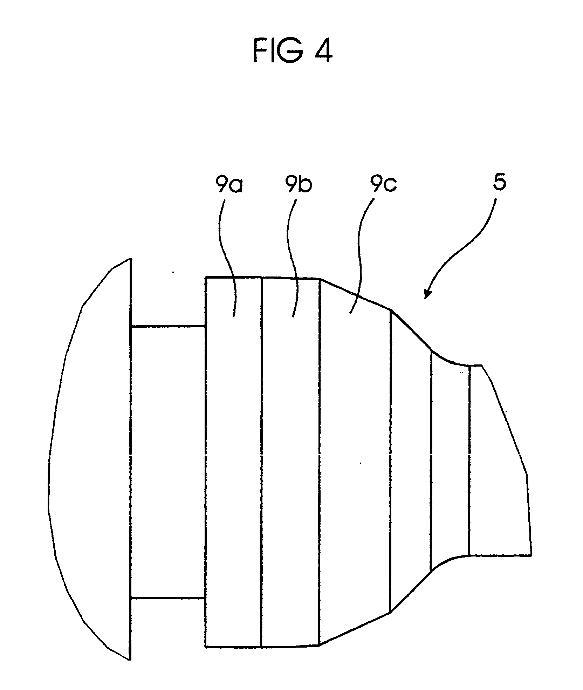

Der Drosselkolben 5 ist im wesentlichen ein Metallzylinder, der in seinem mittleren Bereich eine radiale Verjüngung 6 (s. Fig. 4) aufweist. Der Drosselkanal 4 ist ein zum Drosselkolben 5 korrespondierender Innenzylinder, er ist also als zylinderförmiger Hohlraum ausgebildet. Die beiden Durchlassventile ragen - bezogen auf Fig. 1 - mit ihrem oberen Ende aus dem Gehäuse 1 heraus, wobei das obere Ende als Betätigungselement für eine Bedienperson dient. Am gegenüberliegenden unteren Ende ist der Drosselkolben 5 jeweils über eine Feder 7 am Gehäuse 1 abgestützt. Der mittels des Daumens einer Bedienperson längsverschiebbare (betätigbare) Drosselkolben 5 steuert den Volumenstrom zwischen der Zuströmöffnung 2 und der Abströmöffnung 3. Hierzu dient die Verjüngung 7, die mit dem Drosselkanal 5 einen Überströmdurchlass (Strömungsringspalt) 8 bildet. Aus Fig. 1 ist entnehmbar, dass der Überströmquerschnitt jeweils von der Stellung des Drosselkolbens 5 abhängt.

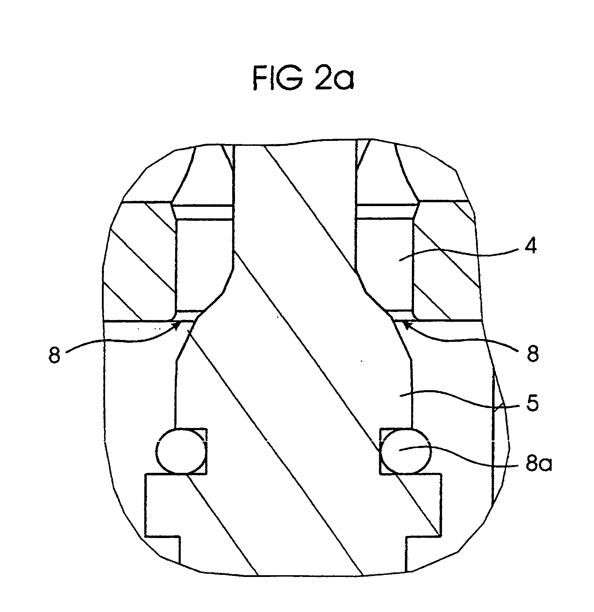

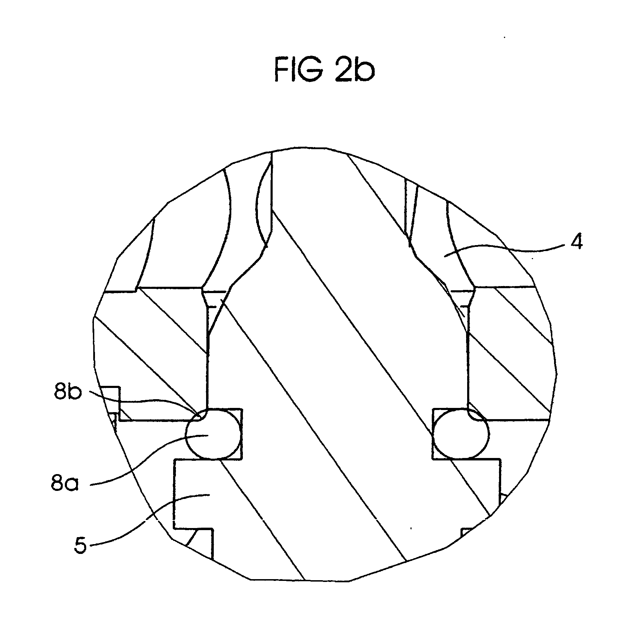

Fig. 2a zeigt eine vergrößerte Darstellung im Bereich des Strömdurchlasses 8 gemäß Fig. 1, Fig. 2b zeigt diesen bei geschlossenem Durchlassventil. Der Überströmdurchlass 8 ist in Fig. 2b mittels eines Dichtrings 8a und einer Ringanlage 8b dicht verschlossen.

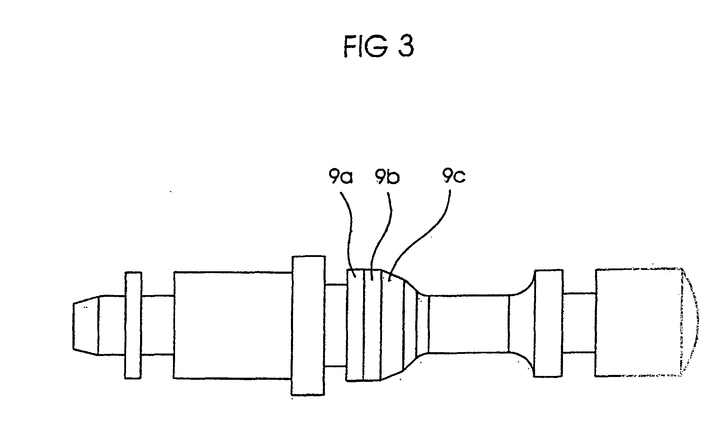

Fig. 3 stellt den Drosselkolben 5 gemäß Fig. 1 dar. Fig. 4 zeigt einen mittleren Bereich des Drosselkolbens 5 in einer vergrößerten Darstellung.

Gemäß Fig. 4 weist der Drosselkolben 5 drei steuerungstechnische Längsabschnitte 9 auf, und zwar zunächst einen zylindrischen Anfangsabschnitt 9a, dessen Außendurchmesser etwas kleiner ist als der Innendurchmesser des Drosselkanals 4. Auf diese Weise wird ein Ringspalt 10 gebildet, der den Volumenstrom aufgrund seiner effektiven Länge bestimmt. Den Überströmdurchlass 8 kann man in diesem Bereich auch als Restüberströmdurchlass bezeichnen.

An den Anfangsabschnitt 9a schließt sich ein mittlerer Abschnitt 9b an, der den Anfangsbereich der Verjüngung 6 umfasst. Aufgrund der zunehmenden radialen Verjüngung 6 (abnehmender Durchmesser pro Längeneinheit des Drosselkolbens 5) nimmt auch der Überströmquerschnitt des Überströmdurchlasses 8 progressiv zu. Er wird damit in Abhängigkeit von der Längsverschiebung des Drosselkotbens 5 überproportional größer.

An den mittleren Abschnitt 9b schließt sich ein Endabschnitt 9c in Form eines Konusstückes an, mit steilem Konuswinkel im Vergleich zum Anstiegswinkel des mittleren Abschnitts 9b. In diesem Bereich ist eine feinfühlige Steuerung des Balancers nicht mehr erforderlich; es kommt lediglich darauf an, das Druckgefälle optimal auszunutzen, um eine hohe Lastgeschwindigkeit zu erzielen.

Die Ausführung des Drosselkolbens 5 mit den drei Abschnitten 9a, 9b, 9c stellt aufgrund der durchgehend progressiven Zunahme des Überströmquerschnitts sicher, dass eine feinfühlige Steuerung des Hebezeugs erzielt wird.

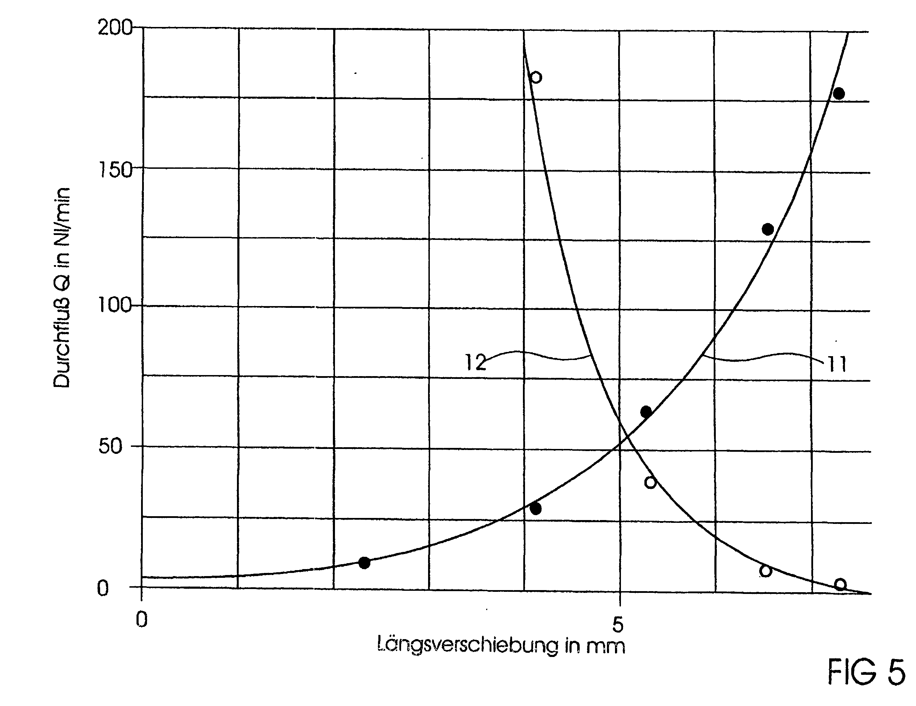

Eine zugehörige Durchflusskennlinie des Durchlassventils ist in Fig. 5 gezeigt, wobei der Durchfluss (Durchflusskurve 11) und der zum Durchfluss korrespondierende Widerstandsbeiwert (Widerstandsbeiwertkurve 12) jeweils als Funktion der Längsverschiebung des Drosselkolbens 5 dargestellt sind.

### Bezugszeichenliste

- 1: Gehäuse
- 2: Zuströmöffnung
- 3: Abströmöffnung
- 4: Drosselkanal
- 5: Drosselkolben
- 6: Verjüngung
- 7: Feder
- 8: Überströmdurchlass
- 8a: Dichtrings Ringanlage
- 8b: Ringanlage
- 9: Längsabschnitt
- 9a: Anfangsabschnitt
- 9b: mittlerer Abschnitt
- 9c: Endabschnitt
- 10: Ringspalt
- 11: Durchflusskurve
- 12: Widerstandsbeiwertkurve

## Patentansprüche

1. Pneumatisches Drosselventil, mit einem Gehäuse,
mit einer Zuströmöffnung und einer Abströmöffnung, die über einen Drosselkanal miteinander verbunden sind,
unter Zwischenschaltung eines Drosselkolbens, der im Drosselkanal längsverschieblich zwischen einer Ausgangsstellung und einer Endstellung angeordnet ist und
quer zu seiner Längsrichtung eine Verjüngung aufweist, die mit dem Drosselkanal einen Überströmdurchlass bildet,
dessen Überströmquerschnitt von der Stellung des Drosselkolbens abhängt, wobei die Verjüngung (6) derart ausgebildet ist,
dass der Überströmquerschnitt beim Verschieben des Drosselkolbens (5) aus seiner Ausgangsstellung in seine Endstellung progressiv zunimmt,
**dadurch gekennzeichnet,**
**dass** der Drosselkolben (5) drei Längsabschnitte (9) aufweist:
- einen zylindrischen Anfangsabschnitt (9a), dessen Außendurchmesser kleiner als der Innendurchmesser des Drosselkanals ist, so dass ein Ringspalt (10) gebildet wird, der den Überströmdurchlass (8) im Bereich der Ausgangsstellung bildet,
- einen mittleren Abschnitt (9b), der den Anfangsbereich der Verjüngung (6) umfasst und der den progressiv zunehmenden Überströmquerschnitt bildet,
- einen Endabschnitt (9c) in Form eines Konusstücks mit steilem Konuswinkel zur Ausnutzung des größtmöglichen Druckgefälles zwischen der Zuströmöffnung (2) und der Abströmöffnung (3).

2. Drosselventil nach Anspruch 1,
**dadurch gekennzeichnet,**
**dass** ein Ende des Drosselkolbens (5) aus dem Gehäuse (1) herausragend ein Betätigungselement bildet, das von einer Bedienperson zur Längsverschiebung des Drosselkolbens (5) mittels des Daumens betätigbar ist.

3. Drosselventil nach einem der vorhergehenden Ansprüche,
**dadurch gekennzeichnet,**
**dass** der Drosselkolben (5) ein Zylinder mit einer radialen Verjüngung (6) ist, die in einer seiner Längsrichtungen progressiv abnimmt, und dass der Drosselkanal (4) einen zum Drosselkolben (5) korrespondierenden zylinderförmigen Hohlraum bildet.

## Claims

1. Pneumatic throttle valve, with a housing with an inlet port and an outlet port which are connected to one another by a throttle channel, with the interposition of a throttle piston which is disposed in the throttle channel so as to be longitudinally movable between a starting position and an end position and has transversely with respect to its longitudinal direction a taper which with the throttle channel forms an overflow passage, the overflow cross-section of which is dependent upon the position of the throttle piston, wherein the taper (6) is constructed in such a way that when the throttle piston is moved from the starting position to the end position the overflow cross-section increases progressively, **characterised in that** the throttle piston (5) has three longitudinal sections (9):
- a cylindrical starting section (9a), the external diameter of which is smaller than the internal diameter of the throttle channel so that an annular gap (10) is produced which forms the overflow passage (8) in the region of the starting position,
- a central section (9b) which includes the starting region of the taper (6) and forms the progressively increasing overflow cross-section,
- an end section (9c) in the form of a conical piece with a steep cone angle for utilisation of the greatest possible pressure drop between the inlet port (2) and the outlet port (3).

2. Throttle valve as claimed in Claim 1, **characterised in that** one end of the throttle piston (5) projects out of the housing (1) to form an actuating element which can be actuated by an operator for longitudinal movement of the throttle piston (5) using the thumb.

3. Throttle valve as claimed in any one of the preceding claims, **characterised in that** the throttle piston (5) is a cylinder with a radial taper (6) which decreases progressively in its longitudinal direction, and that the throttle channel (4) forms a cylindrical hollow space corresponding to the throttle piston (5).

## Revendications

1. Soupape d'étranglement pneumatique comportant un boîtier doté d'une ouverture d'admission et d'une ouverture d'évacuation qui sont reliées entre elles par un canal de régulation en intercalant un piston de régulation qui est placé dans le canal de régulation de façon à être mobile longitudinalement entre une position de départ et une position finale et qui comporte transversalement à sa direction longitudinale un rétrécissement qui forme avec le canal de régulation un passage de surcharge dont la section de surcharge dépend de la position du piston de régulation, le rétrécissement (6) étant conformé de telle sorte que la section de surcharge augmente progressivement de sa position de départ vers sa position finale lorsque le piston de régulation (5) se déplace,
**caractérisée en ce que** le piston de régulation (5) comporte trois portions longitudinales (9) à savoir :
- une portion initiale cylindrique (9a) dont le diamètre extérieur est inférieur au diamètre intérieur du canal de régulation de façon à former un espace annulaire (10) qui forme le passage de surcharge (8) dans la région de la position de départ,
- une portion moyenne (9b) qui comporte la région initiale du rétrécissement
(6) et qui forme une section de surcharge progressivement croissante,
- une portion finale (9c) se présentant sous la forme d'une pièce conique à angle obtus afin d'exploiter la plus grande chute de pression possible entre l'ouverture d'admission (2) et l'ouverture d'évacuation (3).

2. Soupape d'étranglement selon la revendication 1, **caractérisée en ce qu'**une extrémité du piston de régulation (5) saillant du boîtier (1) forme un élément de commande qui peut être actionné par un opérateur pour déplacer longitudinalement avec le pouce le piston de régulation (5).

3. Soupape d'étranglement selon l'une des revendications précédentes,
**caractérisée en ce que** le piston de régulation (5) est un cylindre présentant un rétrécissement radial (6) qui diminue progressivement dans l'une de ses directions longitudinales, et **en ce que** le canal de régulation (4) forme un espace cylindrique correspondant au piston de régulation (5).
